# EUROPEAN PATENT SPECIFICATION

(11) **EP 2 017 072 B1**
(45) Date of publication and mention of the grant of the patent: **03.07.2019**
(21) Application number: 08251688.1
(22) Date of filing: 13.05.2008
(51) Int. Cl.: B32B 5/08, B64C 1/40

(54) **Burn resistant organic matrix composite material**
Feuerbeständiges organisches Matrixverbundstoffmaterial
Matériau composite de matrice organique résistant aux brûlures

(30) Priority: 17.07.2007 US 778681
(43) Date of publication of application: 21.01.2009
(73) Proprietor: United Technologies Corporation, Farmington, CT 06032 (US)
(72) Inventor: Schichting, Kevin W., Storrs Connecticut 06268 (US); Freling, Melvin, West Hartford Connecticut 06117 (US); Hansen, James O., Glastonbury Connecticut 06033 (US)
(74) Representative: Dehns

(56) References cited:
- EP-A- 0 453 784
- WO-A-85/03032
- WO-A-93/18824
- US-A- 5 480 706
- US-A- 5 509 781
- US-A- 5 858 530

## Description

### BACKGROUND OF THE INVENTION

This invention relates to composite materials and, more particularly, to burn resistant composite materials for use in structures such as gas turbine engines.

Machines such as gas turbine engines or other structures create or are exposed to relatively high temperatures that can, on occasion, result in ignition. For example, imbalance within a compressor of a gas turbine engine may cause a rotating compressor blade to rub against an outer compressor case surrounding the compressor. Friction between the blade and the compressor case may cause temperatures greater than 2700 F (1482 C) and possibly even result in ignition of certain materials used within the compressor and temperatures as high as 6000 F (3300 C).

In conventional compressor arrangements, the compressor is surrounded by a compressor case and, depending on the type of engine, an outer case that defines a duct radially outwards of the compressor. One or both of the cases are made of a metallic alloy, such as a titanium alloy. Although conventional cases have a containment capacity that is effective for containing flames and debris, there is opportunity to enhance the containment capacity. For example, if the temperature within the compressor were to exceed an ignition temperature or a melting temperature of the metallic alloy, the metallic alloy may ignite or liquefy and thereby result in loss of containment capacity.

Accordingly, there is a need for a case that provides enhanced burn and thermal resistance for maintaining containment capacity, including molten metal containment, of the case at elevated temperatures. This invention addresses those needs while avoiding the shortcomings and drawbacks of the prior art.

WO 85/03032 discloses a composite material structure for fireproof firewalls.

According to the present invention there is provided a gas turbine engine as defined by claim 1, wherein the case comprises at least one composite layer having first fibers within a first organic resin matrix. At least one burn resistance layer is disposed adjacent the at least one composite layer. The burn resistance layer includes second fibers within a second organic resin matrix. The composite layer and the burn resistance layer each have an associated thermal resistance, and the thermal resistance of the burn resistance layer is greater than the thermal resistance of the composite layer. The second fibers are inorganic fibers, aramid fibers, or combinations thereof and the second fibers include a burn resistant coating comprising a silicate material.

An example method of manufacturing a burn resistant composite article includes the steps of forming the at least one composite layer, and forming the at least one burn resistance layer adjacent the at least one composite layer. For example, the composite layer and the burn resistance layer are formed from pre-impregnated layers.

### BRIEF DESCRIPTION OF THE DRAWINGS

The various features and advantages of this invention will become apparent to those skilled in the art from the following detailed description of some preferred embodiments. The drawings that accompany the detailed description can be briefly described as follows:
Figure 1 illustrates an example gas turbine engine;
Figure 2 illustrates a portion of a case within the gas turbine engine;
Figure 3 is a cross-section of an example fiber used within a burn resistance layer of the case;
Figure 4 is another embodiment of an example case;
Figure 5 is another embodiment of an example case; and
Figure 6 is an example method of manufacturing the case.

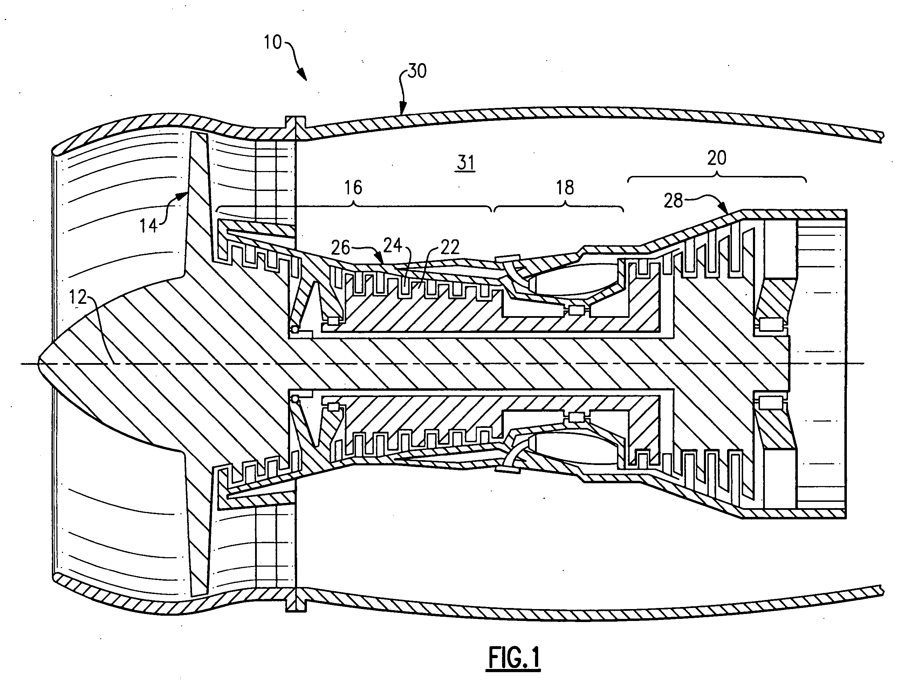

Figure 1 illustrates selected portions of an example gas turbine engine 10, such as a gas turbine engine 10 used for propulsion. In this example, the gas turbine engine 10 is circumferentially disposed about an engine centerline 12. The engine 10 in this example includes a fan 14, a compressor section 16, a combustion section 18, and a turbine section 20. The compressor section 16 includes rotatable compressor blades 22 and static compressor vanes 24 that cooperatively compress air for combustion in the combustion section 18.

A compressor case 26 generally surrounds the compressor section 16 to form a central duct or passage there through. The shape of the compressor case 26 may vary depending on a design of the compressor section 16, but generally the compressor case 26 is a sleeve-like structure arranged about the compressor blades 22 and vanes 24. The compressor case 26 may include a single wall, a double wall having an inner and outer wall, or a single wall section in combination with a double wall section.

The gas turbine engine 10 may also include other case structures, such as a turbine case 28 and an outer case 30 (e.g., a nacelle). The outer case 30 generally surrounds the compressor case 26 and forms a radially outer wall of a fan bypass passage 31 from the fan 14 of the engine 10. The shape of the outer case 30 may vary by engine type and design but is generally a sleeve like structure having a single wall.

As can be appreciated, the properties and functions of the various cases 26, 28, and 30 may vary depending upon structural requirements, containment requirements, or other design factors. For example, the disclosed compressor case 26 and outer case 30 provide containment capability within the compressor section 16, where temperatures are expected to peak between 2700°F (1482°C) and 6,000°F (3,316°C) under certain blade rub conditions. Given this description, one of ordinary skill in the art will recognize the application of the disclosed examples to meet the needs of their particular use.

As is known, the air compressed in the compressor section 16 is mixed with fuel in the combustion section 18 and is burned to produce hot gasses that are expanded in the turbine section 20 to drive the fan 14. Figure 1 is a somewhat schematic presentation for illustrative purposes only and is not a limitation on the disclosed examples. Additionally, there are various types of gas turbine engines for conventional takeoff and landing (CTOL), carrier-variant takeoff and landing (CV) and short takeoff and vertical landing (STOVL), many of which could benefit from the examples disclosed herein, which are not limited to the design shown.

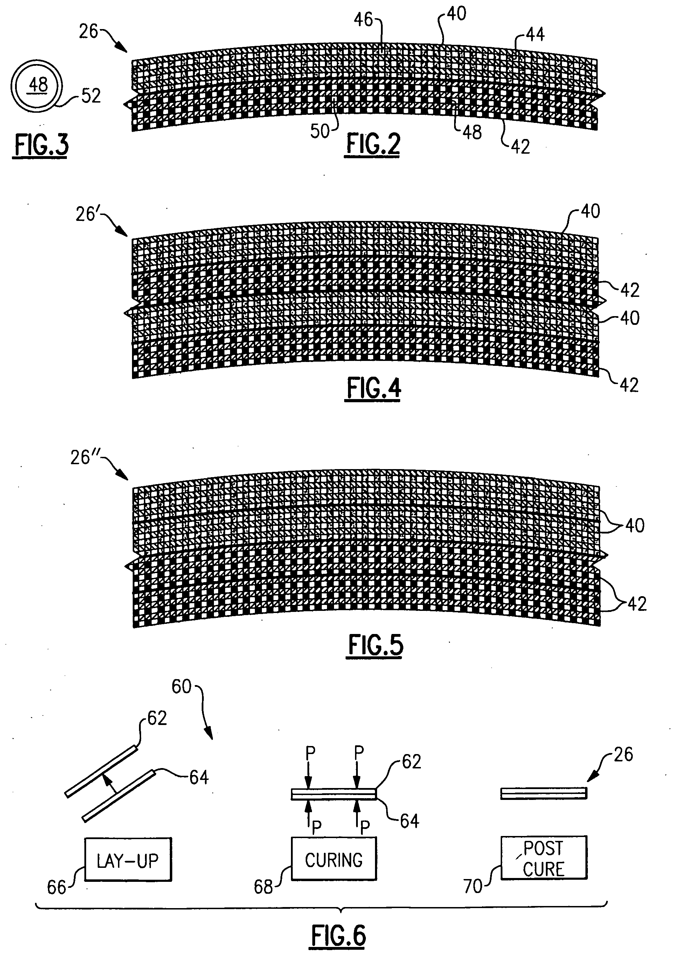

Figure 2 illustrates an example portion of the compressor case 26, although it is to be understood that the examples are also applicable to cases 28 and 30. In this example, the compressor case 26 includes a composite layer 40 and a burn resistance layer 42. For example, the composite layer 40 provides the compressor case 26 with structural rigidity and strength, while the burn resistance layer 42 may provide rigidity and strength in addition to thermal and burn resistance.

The composite layer 40 and the burn resistance layer 42 each have a characteristic thermal resistance. For example, the thermal resistance can be characterized by a burn resistance of each of the layers 40 and 42, or by a mechanical property at a pre-selected temperature (e.g., strength at a certain temperature), or by another suitable method. The thermal resistance of the burn resistance layer 42 is greater than the thermal resistance of the composite layer 40, which allows the burn resistance layer 42 to withstand elevated temperatures without significant degradation or melting to maintain a desired degree of containment capability.

If burn resistance is used to characterize the thermal resistance, the burn resistance of the burn resistance layer 42 is greater than the burn resistance of the composite layer 40. Burn resistance can be estimated qualitatively or quantitatively from the compositions of the layers 40 and 42 or be determined experimentally. For example, when exposed to a flame, the burn resistance layer 42 self-extinguishes in a shorter amount of time than the composite layer 40 or further, when exposed to molten metal, the burn resistant layer is not penetrated.

In the disclosed example, the composite layer 40 includes reinforcing fibers 44 within an organic resin matrix 46, such as polyimide, epoxy, or bismaleimide. For example, the reinforcing fibers 44 may include organic aramid fibers, glass fibers, graphite fibers, ceramic fibers or combinations thereof. The reinforcing fibers 44 may be distributed within the organic matrix 46 in a manner suitable for providing the composite layer 40 with a desired degree of strength and rigidity. In one example, the reinforcing fibers 44 are woven in a predetermined pattern and later impregnated with the organic resin matrix 46.

The burn resistance layer 42 also includes fibers 48 disposed within an organic resin matrix 50, such as polyimide, epoxy, or bismaleimide. The fibers 48 provide the burn resistance layer 42 with its thermal and burn resistance properties. For example, the fibers 48 are made of a heat resistant and/or burn resistant material. In one example, the fibers 48 are inorganic fibers, aramid fibers, or combinations thereof. In a further example, the fibers 48 are inorganic fibers made from alumina (Al₂O₃), silica (SiO₂), various silicates (examples include MSiO₄, MSi₂O₇, MSiO₃, etc. where "M" denotes single or multiple cations species), mullite (3Al₂O₃ - 2SiO₂), zirconia (ZrO₂), or combinations thereof. The relatively high thermal resistance of such fibers, compared to other materials such as metals and some polymers, allows them to maintain mechanical integrity and resist oxidation and burning under compressor conditions that may peak between 2700°F (1482°C) and 6,000°F (3,316°C).

The fibers 48 may all be made of a single type of ceramic or inorganic fiber, such as the alumina, silica, silicates, mullite, or zirconia fibers described above. Alternatively, the fibers 48 may include at least two different types of the inorganic fibers, or inorganic fibers and organic fibers such as aramid fibers. The different types of the fibers 48 may be woven in a predetermined pattern, such as plain, twill, basket, Leno, satin, herringbone, or other known pattern.

As shown in Figure 3, the fibers 48 in the above examples of the burn resistance layer 42 are coated with a burn resistant coating 52. The burn resistant coating 52 may be applied onto the fibers 48 prior to forming the burn resistance layer 42, such as after forming the fibers 48 but before weaving the fibers 48 into the desired pattern.

The burn resistant coating 52 includes an inorganic material such as a silicate.

In the illustrated example, the compressor case 26 includes a single composite layer 40 and a single burn resistance layer 42. Figure 4 illustrates a portion of another example compressor case 26' that is similar to the compressor case 26 of the above examples except that the compressor case 26' includes a plurality of the composite layers 40 and a plurality of the burn resistance layers 42. The composite layers 40 and the burn resistance layers 42 are stacked alternately such that at least one of the burn resistance layers 42 is between two of the composite layers 40 and at least one of the composite layers 40 is between two of the burn resistance layers 42. It is to be understood that additional composite layers 40 and burn resistance layers 42 may be used in the compressor case 26'. Using a plurality of the layers 40 and 42 provides the benefit of additional strength, thermal resistance, and burn resistance,

Figure 5 illustrates a portion of another example compressor case 26". The compressor case 26" is similar to the example compressor case 26 shown in Figure 2, except that the compressor case 26" includes a plurality of the composite layers 40 and a plurality of the burn resistance layers 42. In this example, two of the composite layers 40 are stacked in direct contact with each other, and two of the burn resistance layers 42 are stacked in direct contract with each other. Alternatively, the compressor case 26', 26" in the above examples may include only a single composite layer 40 or a single burn resistance layer 42. Given this description, one of ordinary skill in the art will recognize alternative arrangements of the composite layers 40 and the burn resistance layers 42 to meet their particular needs.

Additionally, the arrangement of the composite layers 40 and the burn resistance layers 42 in a radial direction relative to the engine centerline 12 may be selected based upon design considerations of the particular compressor section 16. One of the burn resistance layers 42 is used as a radially innermost layer of the compressor case 26, 26', 26" to protect one or more of the composite layers 40 that are radially outwards of the burn resistance layer 42 from exposure to elevated temperatures or flames within the compressor section 16.

Figure 6 illustrates one example method 60 for manufacturing the compressor case 26, 26', 26", which may be made of an single continuous piece or from several separate pieces that are secured together. In this example, the composite layer 40 and the burn resistance layer 42 are manufactured from respective pre-impregnated layers 62 and 64. For example, the pre-impregnated layers 62 and 64 include one or more sheets of woven fibers (i.e., fibers 44 or 48) impregnated with uncured organic matrix resin, such as by using vacuum impregnation. The pre-impregnated layers 62 and 64 are then stacked in a desired configuration in a lay-up process (e.g., any of the configurations shown in Figures 2, 4, or 5) at step 66. The pre-impregnated layers 62 and 64 may be supplied as sheets and cut to a desired shape and dimension before stacking.

At step 68, the stacked pre-impregnated sheets 62 and 64 are co-cured, such as by heating at a predetermined temperature for a predetermined period of time. Optionally, a pressure P may be applied to the stack of the pre-impregnated sheets 62 and 64 to mold the pre-impregnated sheets 62 and 64 into a desired shape and "squeeze" excess organic matrix resin from the fibers 44 and 48, for example. One or more post curing steps 70, such as machining, may be used to smooth the compressor case 26 or shape it into a desired dimension.

## Claims

1. A gas turbine engine (10) comprising:
a compressor section (16) having at least one rotatable blade (22); and
a case (26,28,30) located radially outwards from the at least one rotatable blade (22), **characterised by**:
the case (26,28,30) comprising a composite having at least one composite layer (40) and at least one burn resistance layer (42) adjacent the at least one composite layer (40), the at least one burn resistance layer (42) being a radially innermost layer of the case (26,28,30) and the at least one composite layer (40) being radially outwards of the at least one burn resistance layer (42); and by
the at least one composite layer (40) including first fibers (44) within a first organic resin matrix (46) and the burn resistance layer (42) including second fibers (48) within a second organic resin matrix (50), wherein the composite layer (40) has a first burn resistance and the burn resistance layer (42) has a second burn resistance that is greater than the first burn resistance; and by
the second fibers (48) being inorganic fibres, aramid fibres, or combinations thereof and the second fibers (48) including a burn resistant coating (52) comprising a silicate material.

2. The gas turbine engine as recited in claim 1, wherein the first fibers (44) have a first burn resistance and the second fibers (48) have a second burn resistance that is greater than the first burn resistance.

3. The gas turbine engiune as recited in claim 1 or 2, wherein the first fibers (44) comprise organic fibers.

4. The gas turbine engine as recited in claim 1, 2 or 3 wherein the second fibers (48) comprise aramid fibers, alumina fibers, silica fibers, silicate fibers, mullite fibers, zirconia fibers, or combinations thereof.

5. The gas turbine engine as recited in any preceding claim, wherein the second organic matrix (50) includes at least one of polyimide, epoxy, or bismaleimide.

6. The gas turbine engine as recited in any preceding claim, wherein the first fibers (44) comprise organic aramid fibers, glass fibers, graphite fibers, ceramic fibers or combinations thereof.

7. The gas turbine engine as recited in any preceding claim, wherein the second fibers (48) are woven.

8. The gas turbine engine as recited in any preceding claim, wherein the second fibers (48) include inorganic fibers and organic fibers that are interwoven with the inorganic fibers.

9. The gas turbine engine as recited in any of claims 1 to 9, wherein the second fibers (48) include inorganic fibers and aramid fibers that are interwoven with the inorganic fibers.

10. The gas turbine engine as recited in any preceding claim, wherein the at least one composite layer (40) comprises a plurality of the composite layers (40), and the at least one burn resistance layer (42) comprises a plurality of the burn resistance layers (42).

## Patentansprüche

1. Gasturbinenmotor (10), umfassend:
einen Verdichterabschnitt (16), der zumindest eine drehbare Schaufel (22) aufweist; und
ein Gehäuse (26, 28, 30), das sich radial außerhalb der zumindest einen drehbaren Schaufel (22) befindet, **dadurch gekennzeichnet, dass**:
das Gehäuse (26, 28, 30) einen Verbundstoff umfasst, der zumindest eine Verbundstoffschicht (40) und zumindest eine Feuerbeständigkeitsschicht (42) benachbart zu der zumindest einen Verbundstoffschicht (40) aufweist, wobei die zumindest eine Feuerbeständigkeitsschicht (42) eine radial innerste Schicht des Gehäuses (26, 28, 30) ist und sich die zumindest eine Verbundstoffschicht (40) radial außerhalb der zumindest einen Feuerbeständigkeitsschicht (42) befindet; und dass
die zumindest eine Verbundstoffschicht (40) erste Fasern (44) innerhalb einer ersten organischen Harzmatrix (46) beinhaltet und die Feuerbeständigkeitsschicht (42) zweite Fasern (48) innerhalb einer zweiten organischen Harzmatrix (50) beinhaltet, wobei die Verbundstoffschicht (40) eine erste Feuerbeständigkeit aufweist und die Feuerbeständigkeitsschicht (42) eine zweite Feuerbeständigkeit aufweist, die größer als die erste Feuerbeständigkeit ist; und dass
die zweiten Fasern (48) anorganische Fasern, Aramidfasern oder Kombinationen davon sind und die zweiten Fasern (48) eine feuerbeständige Beschichtung (52) beinhalten, die ein Silikatmaterial umfasst.

2. Gasturbinenmotor nach Anspruch 1, wobei die ersten Fasern (44) eine erste Feuerbeständigkeit aufweisen und die zweiten Fasern (48) eine zweite Feuerbeständigkeit aufweisen, die größer als die erste Feuerbeständigkeit ist.

3. Gasturbinenmotor nach Anspruch 1 oder 2, wobei die ersten Fasern (44) organische Fasern umfassen.

4. Gasturbinenmotor nach Anspruch 1, 2 oder 3, wobei die zweiten Fasern (48) Aramidfasern, Aluminiumoxidfasern, Siliziumdioxidfasern, Silikatfasern, Mullitfasern, Zirkoniumdioxidfasern oder Kombinationen davon umfassen.

5. Gasturbinenmotor nach einem vorhergehenden Anspruch, wobei die zweite organische Matrix (50) zumindest eines von Polyimid, Epoxid oder Bismaleimid beinhaltet.

6. Gasturbinenmotor nach einem vorhergehenden Anspruch, wobei die ersten Fasern (44) organische Aramidfasern, Glasfasern, Graphitfasern, Keramikfasern oder Kombinationen davon umfassen.

7. Gasturbinenmotor nach einem vorhergehenden Anspruch, wobei die zweiten Fasern (48) gewebt sind.

8. Gasturbinenmotor nach einem vorhergehenden Anspruch, wobei die zweiten Fasern (48) anorganische Fasern und organische Fasern, die mit den anorganischen Fasern verwebt sind, beinhalten.

9. Gasturbinenmotor nach einem der Ansprüche 1 bis 9, wobei die zweiten Fasern (48) anorganische Fasern und Aramidfasern, die mit den anorganischen Fasern verwebt sind, beinhalten.

10. Gasturbinenmotor nach einem vorhergehenden Anspruch, wobei die zumindest eine Verbundstoffschicht (40) eine Vielzahl der Verbundstoffschichten (40) umfasst und die zumindest eine Feuerbeständigkeitsschicht (42) eine Vielzahl von Feuerbeständigkeitsschichten (42) umfasst.

## Revendications

1. Moteur à turbine à gaz (10) comprenant :
une section compresseur (16) ayant au moins une pale rotative (22) ; et
un carter (26, 28, 30) situé radialement vers l'extérieur de l'au moins une pale rotative (22), **caractérisé en ce que** :
le carter (26, 28, 30) comprend un composite ayant au moins une couche composite (40) et au moins une couche de résistance à la brûlure (42) adjacente à l'au moins une couche composite (40), l'au moins une couche de résistance à la brûlure (42) étant une couche radialement le plus à l'intérieur du carter (26, 28, 30) et l'au moins une couche composite (40) étant radialement à l'extérieur de l'au moins une couche de résistance à la brûlure (42) ; et **en ce que**
l'au moins une couche composite (40) comprend des premières fibres (44) à l'intérieur d'une première matrice de résine organique (46) et la couche de résistance à la brûlure (42) comprend des secondes fibres (48) à l'intérieur d'une seconde matrice de résine organique (50), dans lequel la couche composite (40) a une première résistance à la brûlure et la couche de résistance à la brûlure (42) a une seconde résistance à la brûlure qui est supérieure à la première résistance à la brûlure ; et **en ce que**
les secondes fibres (48) sont des fibres inorganiques, des fibres d'aramide ou des combinaisons de celles-ci et les secondes fibres (48) comprennent un revêtement résistant à la brûlure (52) comprenant un matériau de silicate.

2. Moteur à turbine à gaz selon la revendication 1, dans lequel les premières fibres (44) ont une première résistance à la brûlure et les secondes fibres (48) ont une seconde résistance à la brûlure qui est supérieure à la première résistance à la brûlure.

3. Moteur à turbine à gaz selon la revendication 1 ou 2, dans lequel les premières fibres (44) comprennent des fibres organiques.

4. Moteur à turbine à gaz selon la revendication 1, 2 ou 3, dans lequel les secondes fibres (48) comprennent des fibres d'aramide, des fibres d'alumine, des fibres de silice, des fibres de silicate, des fibres de mullite, des fibres de zircone, ou des combinaisons de celles-ci.

5. Moteur à turbine à gaz selon une quelconque revendication précédente, dans lequel la seconde matrice organique (50) comporte au moins un de polyimide, époxy ou bismaléimide.

6. Moteur à turbine à gaz selon une quelconque revendication précédente, dans lequel les premières fibres (44) comprennent des fibres d'aramide organiques, des fibres de verre, des fibres de graphite, des fibres de céramique ou des combinaisons de celles-ci.

7. Moteur à turbine à gaz selon une quelconque revendication précédente, dans lequel les secondes fibres (48) sont tissées.

8. Moteur à turbine à gaz selon une quelconque revendication précédente, dans lequel les secondes fibres (48) comportent des fibres inorganiques et des fibres organiques qui sont entrelacées avec les fibres inorganiques.

9. Moteur à turbine à gaz selon l'une quelconque des revendications 1 à 9, dans lequel les secondes fibres (48) comportent des fibres inorganiques et des fibres d'aramide qui sont entrelacées avec les fibres inorganiques.

10. Moteur à turbine à gaz selon une quelconque revendication précédente, dans lequel l'au moins une couche composite (40) comprend une pluralité des couches composites (40), et l'au moins une couche de résistance à la brûlure (42) comprend une pluralité des couches de résistance à la brûlure (42) .
